# EUROPÄISCHE PATENTSCHRIFT

(11) **EP 0 705 065 B1**
(45) Veröffentlichungstag und Bekanntmachung des Hinweises auf die Patenterteilung: **23.09.1998**
(21) Anmeldenummer: 95907622.5
(22) Anmeldetag: 26.01.1995
(51) Int. Cl.: A47B 47/00, F16B 12/40

(54) **BAUSYSTEM**
STRUCTURAL SYSTEM
SYSTEME D'ELEMENTS STRUCTURAUX

(30) Priorität: 25.04.1994 DE 4414414
(43) Veröffentlichungstag der Anmeldung: 10.04.1996
(73) Patentinhaber: Deubl, Franz, 80799 München (DE); Deubl, Helmut, 83661 Lenggries (DE)
(72) Erfinder: Deubl, Franz, 80799 München (DE); Deubl, Helmut, 83661 Lenggries (DE)
(74) Vertreter: Säger, Manfred, Dipl.-Ing.
(86) Internationale Anmeldenummer: EP9500287
(87) Internationale Veröffentlichungsnummer: WO9528858

(56) Entgegenhaltungen:
- DE-A- 1 484 277
- DE-A- 1 654 759
- DE-A- 2 549 988
- DE-U- 9 100 699
- FR-A- 2 114 876

## Beschreibung

Die Erfindung betrifft ein Bausystem nach dem Oberbegriff des Patentanspruches 1.

Zur Herstellung von Traggestellen beispielsweise Regalen sind Rohre bekannt, die durch besondere Steck- oder Schraubverbindungen miteinander verbindbar sind.

So ist beispielsweise ein Rohr mit einem Verbindungselement bekannt (DE-A-34 05 631), das im wesentlichen von einem sogenannten Wandabschnitt gebildet ist, der in das Rohrende eingeschweißt wird und einen gegenüber dem Rohrende vorstehenden Gewindestab trägt. Der Wandabschnitt kann bei Rechteckrohren in der Diagonalen oder auch parallel zu einer Längsseite des rechteckförmigen Querschnittes in das Rohr eingesetzt werden. Bei Rohren mit kreisförmigen Querschnitt nimmt der Wandabschnitt eine radiale Lage ein.

Sollen hierbei zwei Rohre stirnseitig miteinander verbunden werden, so muß in dem einen Rohr ein Wandabschnitt mit einem Gewindestab und in dem anderen Rohr ein solcher mit einer Gewindemutter vorgesehen werden. Sollen hingegen zwei Rohre winklig zueinander verbunden werden, so ist in dem einen Rohr wiederum ein mit einem Gewindestab versehener Wandabschnitt vorzusehen, während in das andere Rohr eine Bohrung einzuarbeiten ist, durch welche der Gewindestab hindurchgesteckt und von der Innenseite des zweiten Rohres her mit einer in das Rohrinnere einzubringenden Mutter verschraubt wird.

Abgesehen davon, daß die letztgenannte Verbindungsart nur bei Rechteckrohren möglich ist, ist sie auch insofern nachteilig, als beim Anpassen der jeweiligen Rohrlänge an individuell vorgegebene Maße die Rohre auf die individuellen Maße zugeschnitten werden müssen und erst dann die Wandabschnitte eingeschweißt werden können. Dies ist insbesondere dann, wenn es sich um oberflächenbehandelte Rohre handelt besonders nachteilig.

Es ist ferner ein Bausystem bekannt (DE-A-25 49 988), bei dem mit Ausnahme des Innenteils ein im Querschnitt dreistrahlig symmetrisches Stangenteil verwendet wird. Hierbei dient das Innenteil dazu, daß über die gesamte Länge Stangen hindurchgesteckt werden können, so daß darum ein bewegliches Teil, beispielsweise eine Tür oder dergleichen, verschwenkt werden kann. Ferner können radial nach außen stehende Zusatz- oder Halteteile, und/oder Wandanflanschungen vorgesehen sein.

Von Nachteil ist aber die Tatsache, daß die Rohre nicht in Axialrichtung verlängerbar sind, so daß die Einsatzmöglichkeiten ausgesprochen beschränkt sind.

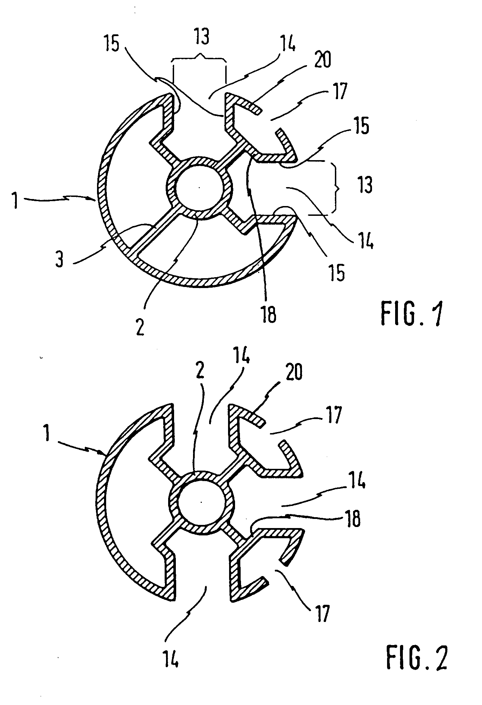

Es ist ferner ein gattungsgemäßes Bausystem gemäß dem Oberbegriff des Hauptanspruches bekannt (DE-U-91 00 699). Das Rohr ist jedoch im Querschnitt rechteckig und nicht (anteilig) kreisförmig. Die Rohre werden mit einem Zwischenstück miteinander verbunden, wobei zwei verschiedene Rechteckrohre (Profil gemäß Fig. 2) zueinander hinsichtlich ihrer Außenfläche fluchtend unter Vermittlung des Zwischenstückes eingesetzt werden können, wenn sie mit einer frei drehbaren Schraube am Zwischenteil fixiert werden. Hierdurch wird in der Mindestausstattung ein Rohr, ein Zwischenstück und eine Schraube benötigt.

Es ist ein weiteres Bausystem mit stabförmigen Bauelementen bekannt. (DE-AS 1 484 277). Die Bauelemente weisen einen zentralen Schaft auf, der im Querschnitt rechteckig oder quadratisch ist. Durch den eckigen Schaft soll die Torsionssteifigkeit erhöht werden. Zwei oder mehrere der stabförmigen Bauelemente können mit einem kubischen Zwischenstück verbunden werden. An den Seitenflächen des kubischen Zwischenstücks sind zentrale Gewindebohrungen eingebracht, an welche vertikal auf den Seitenflächen stehende Balken mittels separater Schrauben befestigt sind. Auf diese Balken sind die stabförmigen Bauelemente mit ihren hohlen Schaft aufgesetzt. Eine Verbindung zwischen zwei stabförmigen Bauelementen besteht somit aus den beiden Bauelementen, zwei Balken, zwei Schrauben und einem Zwischenstück.

Der Erfindung liegt die Aufgabe zugrunde, ein gattungsgemäßes Bausystem zu schaffen, dessen Rohre an beliebiger Stelle gekürzt und dann an seinen Enden stirnseitig oder rechtwinklig miteinander verbunden werden können.

Diese Aufgabe wird bei einem gattungsgemäßen Bausystem gemäß dem Oberbegriff des Hauptanspruches erfindungsgemäß durch dessen kennzeichnende Merkmale gelöst.

Da der Innendurchmesser des Innenteils über die gesamte Rohrlänge konstant ist und dem Kernlochdurchmesser eines vorzugsweise metrischen Gewindes angepaßt ist, kann das Rohr an jeder beliebigen Stelle abgeschnitten und an beiden Stirnseiten ein Gewinde in das Innenteil eingearbeitet werden. Da der Hohlraum des Innenteils so gesehen einer Durchgangsbohrung entspricht, kann das Gewinde unter Zuhilfenahme eines einzigen Gewindebohrers in einem einzigen Arbeitsgang hergestellt werden.

Sollen zwei Rohre lediglich stirnseitig miteinander verbunden werden, so kann in die sich gegenüberliegenden Stirnseiten ein Gewindestab eingedreht und die beiden Rohre unmittelbar gegeneinander verspannt werden.

Wenn demgegenüber zwei Rohre rechtwinklig miteinander verbunden werden sollen, so kann dies unter Verwendung eines Zwischenstückes geschehen.

Das Zwischenstück kann hierbei gemäß einem weitergehenden Vorschlag der Erfindung von einem Würfel oder einer zu einem Würfel abgeflachten Kugel gebildet sein, die mehrere in jeweils zueinander senkrecht stehenden Ebenen vorgesehene Innengewinde aufweist, deren Nenndurchmesser größer als der Nenndurchmesser der in die Rohre einzuarbeitenden Innengewinde ist.

Zur Herstellung einer Schraubverbindung zwischen dem Zwischenstück und dem jeweiligen Rohr ist es vorteilhaft, eine Schraube mit einem abgestuften Gewinde, d. h. eine Schraube, die in ihrem Schaftbereich ein Gewinde mit kleinem und in ihrem Kopfbereich ein Gewinde mit demgegenüber größerem Nenndurchmesser aufweist, zu verwenden.

Weitere Vorteile der Erfindung ergeben sich aus den Unteransprüchen, der Beschreibung sowie der beigefügten Zeichnung. Es zeigt:
- Figur 1: einen Querschnitt eines Rohres gemäß einem ersten Ausführungsbeispiel;
- Figur 2: einen Querschnitt eines Rohres gemäß einem zweiten Ausführungsbeispiel;
- Figur 3: eine Draufsicht auf ein Zwischenstück;
- Figur 4: einen Schnitt nach Linie V-V der Figur 3;
- Figur 5: einen Schnitt nach Linie VI-VI der Figur 3; und
- Figur 6: eine Schraube mit abgestuftem Gewinde.

Das in Fig. 1 dargestellte erste Ausführungsbeispiel der Erfindung weist ein Rohr 1 mit zylindrischem Querschnitt auf, in dessen Innenraum ein Innenteil 2 konzentrisch angeordnet ist. Das Innenteil 2 ist von einem Hohlzylinder gebildet dessen Innendurchmesser dem Kernlochdurchmesser eines vorzugsweise metrischen Innengewindes entspricht. Das Innenteil 2 ist über radial verlaufende und sich jeweils über die gesamte Rohrlänge erstreckende Streben 3, 13 mit der Innenwandung des Rohres 1 verbunden und bildet mit diesem eine Einheit.

Ein solches Profil kann in Regellängen im Stranggieß- oder -preßverfahren kostengünstig hergestellt werden. Die in abgestuften Regellängen herzustellenden Rohre 1 können nach Einbringen eines Innengewindes in die jeweiligen Enden des Innenteils 2 mittels eines in ihre einander gegenüberliegenden Stirnseiten einzuschraubenden Gewindestabes unmittelbar stirnseitig miteinander verbunden werden. Sollen die Rohre 1 in von der Regellänge abweichender Länge verarbeitet werden, so können diese auf jede individuelle Länge geschnitten und nach Einarbeiten entsprechender Innengewinde mittels eines einzudrehenden Gewindestabes unmittelbar stirnseitig miteinander verbunden werden.

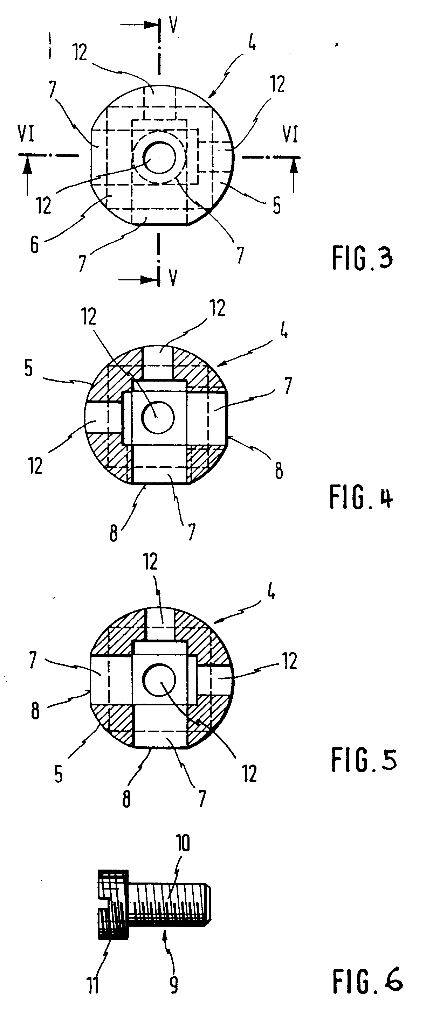

Sollen die Rohre 1 in einer zweiten und dritten Dimension - beispielsweise zur Herstellung eines Regals - in jeweils individueller Länge miteinander verbunden werden so kann dies unter Verwendung von Zwischenstücken 4 gemäß den Figuren 3 bis 5 geschehen.

Ein solches Zwischenstück 4 kann entweder von einer an mehreren Seiten abgeflachten Kugel oder einem Würfel gebildet sein. In den Figuren 3 bis 5 ist ein als Kugel 5 ausgebildetes Zwischenstück 4 gezeigt. In diesen Figuren ist gleichzeitig ein als Würfel 6 ausgebildetes Zwischenstück in Strichlinien dargestellt.

Unabhängig von der äußeren Form des Zwischenstückes 4 weist dieses mehrere - beim gezeigten Ausführungsbeispiel insgesamt drei - Innengewinde 7 auf, deren Nenndurchmesser größer als der Nenndurchmesser der in die Innenteile 2 der entsprechenden Rohre 1 einzubringenden Innengewinde ist. Die Achsen der im Zwischenstücke vorgesehenen Innengewinde 7 verlaufen in drei jeweils senkrecht zueinander angeordneten Ebenen. Demzufolge weist das Zwischenstück 4 insgesamt drei, zur Achse des jeweils zugehörigen Innengewindes 7 jeweils senkrecht verlaufende Anschraubflächen 8 auf.

Zum Verbinden des Zwischenstücks 4 mit den jeweiligen Rohren 1 können Schrauben 9 mit abgestuftem Gewinde verwendet werden. Eine solche Schraube 9, die in ihrem Schaftteil 10 ein Gewinde aufweist, dessen Nenndurchmesser dem Nenndurchmesser der in die Innenteile 2 einzubringenden Gewinde entspricht und in ihrem Kopfteil 11 ein Gewinde mit dem gegenüber größeren Nenndurchmesser versehen ist, ist in Figur 6 dargestellt. Wie insbesondere aus den Figuren 4 und 5 hervorgeht, ist jedem Innengewinde 7 gegenüberliegend eine Bohrung 12 im Zwischenstück 4 vorgesehen. Diese Bohrungen 12 dienen beim Zusammenschrauben von Zwischenstück 4 und Rohr 1 als Montagebohrung zum Anziehen der Schrauben 9.

Bei dem in Figur 1 dargestellten ersten Ausführungsbeispiel der Erfindung weist das Rohr einen zylindrischen Querschnitt auf. Im Inneren des Rohres 1 ist konzentrisch zu dessen Längsachse ein Innenteil 2 angeordnet das von einem Hohlzylinder gebildet ist, dessen Innendurchmesser den Kernlochdurchmesser eines vorzugsweise metrischen Innengewindes entspricht. Das Innenteil ist über mehrere radial verlaufende und sich ebenfalls über die gesamte Rohrlänge erstreckende Streben 3, 13 mit der Innenwandung des Rohres 1 verbunden und bildet mit diesem eine Einheit.

Die beiden Streben 13 sind gegenüber der Strebe 3 wesentlich breiter ausgebildet und weisen je eine sich über die gesamte Rohrlänge entsprechende Nut 14 auf, die zur Aufnahme von nicht dargestellten Glasplatten bzw. zur Aufnahme von aus anderem Werkstoff bestehenden Platten dienen, die eine Auflagefläche bzw. eine Seiten- oder Rückwand eines Regals bilden. Für Gewährleistung möglichst gleich starker Wandstärken des gesamten Rohres 1 verlaufen die Seitenflächen 15 der so gebildeten Nuten 14 im Bereich des Außendurchmessers des Rohres 1 zueinander parallel, während sie im Bereich des Außendurchmessers des Innenteils 2 aufeinanderzu gerichtet sind, so daß die Nut 14 in ihrem dem Innenteil benachbarten Bereich einen im wesentlichen V-förmigen Querschnitt aufweist. Da die Nuten 14 zur Aufnahme von Seitenwandungen bzw. Bodenflächen eines Regals bildenden Platten dienen, sind ihre Symmetrieachsen jeweils um 90° zueinander versetzt.

An die sich zwischen zwei zueinander benachbarten Nuten 14 befindliche radial von dem Innenteil 2 nach außen verlaufende Strebe 3 schließt sich ein quer zu deren beiden Seiten verlaufendes Querstück 18 an. Das Querstück 18 geht in zueinander benachbarte Seitenflächen 15 der beiden benachbarten Nuten über, zwischen denen ein Mantel 20 des Rohrs 1 vorgesehen ist.

Das in Fig. 2 dargestellte zweite Ausführungsbeispiel der Erfindung entspricht in seinem grundsätzlichen Aufbau demjenigen der Figur 1. Der Unterschied hierzu besteht im wesentlichen darin, daß in einer weiteren Strebe eine Nut 14 vorgesehen ist, die zur Aufnahme einer weiteren Platte dient.

Selbstverständlich ist es möglich, in einer weiteren Ausführungsform der Erfindung anstelle der in Fig. 2 vorgesehenen drei Nuten insgesamt vier Nuten 14 vorzusehen, die dann um jeweils 90° zueinander versetzt anzuordnen sind.

Bei sämtlichen Ausführungsbeispielen kann es zur leichteren Herstellung des jeweiligen Rohres 1 vorteilhaft sein, am Innenteil 2 zwischen jeweils zwei Streben 3, 13 eine sich über die gesamte Länge des Rohres erstreckende Nut vorzusehen, um hierdurch die Anzahl der jeweils für sich abgeschlossenen Hohlräume innerhalb des Rohres zu reduzieren.

Zur Befestigung von Bodenträgern, Scharnieren, Beleuchtungskörper oder ähnlicher Teile an der Wandung des Rohres 1 dient die Längsnut 17, die sich vorzugsweise über die gesamte Länge des Rohres erstreckt.

Zur Aufnahme des Zwischenstücks 4 am stirnseitigen Ende eines Rohres 1 ist es vorteilhaft an der Stirnseite des Rohres eine Ausnehmung vorzusehen, deren Form der Außenform des Zwischenstückes angepaßt ist.

Bei sämtlichen vorstehend beschriebenen Ausführungsbeispielen weist das eigentliche Rohr 1 einen zylinderförmigen Querschnitt auf.

## Patentansprüche

1. Bausystem zum Erstellen von Regalen vermittels horizontal anzuordnender Regalböden und/oder von Vitrinen, Schränken oder dergleichen vermittels zusätzlich vertikal anzuordnender Wandteile bestehend aus mindestens zwei mit je einem Innenteil (2) zur Herstellung einer Verbindung versehenen Rohren (1), sowie gegebenenfalls einem zwischen den Rohren anzuordnenden Zwischenstück (4), wobei jedes Innenteil (2) von je einem zum zugehörigen Rohr (1) konzentrisch angeordneten, im Querschnitt kreisförmig gschlossenen Hohlzylinder gebildet ist, der über mehrere, nach außen und über die jeweilige Rohrlänge sich erstreckende Streben (3) mit der Wandung des ihn umgebenden Rohres (1) verbunden und wobei gegebenenfalls das Rohr (1) zwischen zwei zueinander benachbarten Streben (3) mit einer bis zu dem Innenteil (2) reichenden, parallel zu dessen Längsachse verlaufenden und zu dem Bereich außerhalb des Rohrs (1) nach außen offenen Nut (14) versehen ist, deren beide sich an das Rohr (1) nach innen anschließenden Seitenflächen (15) der Nut (14) zueinander parallel und in dem sich an das Innenteil (2) nach außen anschließenden Bereich radial ausgerichtet sind,
**dadurch gekennzeichnet**,
daß das Rohr im Querschnitt kreisförmig ausgebildet ist, daß der Innendurchmesser des geschlossenen Innenteils (2) einem Kernlochdurchmesser eines vorzugsweise metrischen Innengewindes zur Herstellung einer Schraubverbindung zwischen den Rohren (1) durch Einschrauben eines Schraubelements mit dessen Außengewinde entspricht, daß sich an die zwischen zwei zueinander benachbarten Nuten (14) befindliche radial von dem Innenteil nach außen verlaufenden Strebe (3) ein quer zu deren beiden Seiten verlaufendes Querstück (18) anschließt, und daß dieses in die zueinander benachbarten Seitenflächen (15) der beiden benachbarten Nuten (13) übergeht, zwischen denen der die beiden Seitenflächen (15) unter Bildung eines Hohlraums verbundener Mantel (20) des Rohrs (1) vorgesehen ist.

2. Bausystem nach Anspruch 1, dadurch gekennzeichnet, daß der Mantel (20) einen sich vorzugsweise über seine Gesamtlänge erstreckenden Längsschlitz (17) aufweist.

3. Bausystem nach Anspruch 1, dadurch gekennzeichnet, daß das Zwischenstück mehrere im Winkel von jeweils 90° zueinander versetzt angeordnete Innengewinde (7) aufweist, deren Kerndurchmesser größer als der Innendurchmesser des Innenteils ( 2) ist.

4. Bausystem nach Anspruch 3, dadurch gekennzeichnet, daß das Zwischenstück mindestens drei Innengewinde aufweist, deren Längsachse jeweils um 90° zueinander versetzt angeordnet sind.

5. Bausystem nach Anspruch 3 oder Anspruch 4, dadurch gekennzeichnet, daß das Zwischenstück (4) von einer Kugel (5) oder einem Würfel (6) gebildet ist.

6. Bausystem nach einem der Ansprüche 3 bis 5, dadurch gekennzeichnet, daß das Schraubelement (9) als Kopfschraube mit abgestuften Gewindedurchmesser ausgebildet ist, wobei der Durchmesser des am Schaft (10) vorgesehenen Gewindes dem Kernlochdurchmesser des Innenteils (2) der Rohre (1) und das am Kopf (11) vorgesehen Gewinde dem Innengewinde (7) des Zwischenstücks (4) entspricht.

7. Bausystem nach einem der Ansprüche 3 bis 5, dadurch gekennzeichnet, daß die Enden des Rohres (1) zur Aufnahme des Zwischenstücks (4) eine dessen Außenform entsprechende Ausnehmung aufweisen.

8. Bausystem nach einem der Ansprüche 1 bis 7, dadurch gekennzeichnet, daß das Innenteil (2) mittels drei oder vier Streben (3, 13) in der Wandung des Rohrs (1) verbunden ist.

## Claims

1. A structural system for the erection of shelves by means of shelf members which are to be arranged horizontally and/or of showcases, cabinets or the like by means of wall portions which are additionally to be arranged vertically comprising at least two tubes (1) each provided with a respective inner portion (2) for making a connection, and possibly an intermediate member (4) which is to be arranged between the tubes, wherein each inner portion (2) is formed by a respective hollow cylinder which is arranged concentrically with respect to the associated tube (1) and which is closed in a circular shape in cross-section and which is connected to the wall of the tube (1) surrounding it by way of a plurality of struts (3) extending outwardly and over the respective length of the tube, and wherein possibly the tube (1) is provided between two mutually adjacent struts (3) with a groove (14) which reaches as far as the inner portion (2) and which extends parallel to the longitudinal axis thereof and which is open outwardly to the region outside the tube (1) and whose two side surfaces (15) which adjoin the tube (1) in an inward direction are oriented in mutually parallel relationship and radially in the region which adjoins the inner portion (2) in an outward direction,
characterised in that
the tube is of a circular cross-sectional configuration, that the inside diameter of the closed inner portion (2) corresponds to a core hole diameter of a preferably metric female screwthread for producing a screw connection between the tubes (1) by screwing in a screw element with the male screwthread thereof, that adjoining the strut (3) which is disposed between two mutually adjacent grooves (14) and which extends radially outwardly from the inner portion is a transverse portion (18) extending transversely to the two sides of the strut, and that the transverse portion goes into the mutually adjacent side surfaces (15) of the two adjacent grooves (13), between which is provided the peripheral portion (20) of the tube (1), which connects the two side surfaces (15) to form a cavity.

2. A structural system according to claim 1 characterised in that the peripheral portion (20) his a longitudinal slot (17) which preferably extends over its entire length.

3. A structural system according to claim 1 characterised in that the intermediate portion has a plurality of female screwthreads (7) which are arranged in mutually displaced relationship through an angle of 90° respectively and whose core diameter is larger than the inside diameter of the inner portion (2).

4. A structural system according to claim 3 characterised in that the intermediate portion has at least three female screwthreads whose longitudinal axes are respectively arranged in mutually displaced relationship through 90°.

5. A structural system according to claim 3 or claim 4 characterised in that the intermediate portion (4) is formed by a ball (5) or a cube (6).

6. A structural system according to one of claims 3 to 5 characterised in that the screw element (9) is in the form of a headed screw with a stepped screwthread diameter, wherein the diameter of the screwthread provided on the shank (10) corresponds to the core hole diameter of the inner portion (2) of the tubes (1) and the screwthread provided on the head (11) corresponds to the female screwthread (7) of the intermediate portion (4).

7. A structural system according to one of claims 3 to 5 characterised in that to receive the intermediate portion (4) the ends of the tubes (1) have an opening corresponding to the external shape of the intermediate portion.

8. A structural system according to one of claims 1 to 7 characterised in that the inner portion (2) is connected by means of three or four struts (13, 14) in the wall of the tube (1).

## Revendications

1. Système de construction pour l'édification de rayonnages au moyen d'étagères à disposer horizontalement, et/ou de vitrines, d'armoires ou analogues, au moyen de parois complémentaires à disposer verticalement, constitué d'au moins deux tubes (1) munis chacun d'un élément intérieur (2) pour la réalisation d'une liaison, ainsi qu'éventuellement d'un raccord (4) à disposer entre les tubes, chaque élément intérieur (2) étant formé par respectivement un cylindre creux fermé de section transversale circulaire, disposé concentriquement par rapport au tube (1) correspondant, lequel cylindre creux est relié, à la paroi du tube (1) qui l'entoure par plusieurs traverses (3) s'étendant radialement sur la longueur du tube respectif, et tandis qu'éventuellement, ledit tube (1) est muni, entre deux traverses (3) mutuellement voisines, d'une rainure (14) parvenant jusqu'à l'élément intérieur (2), s'étendant parallèlement à son axe longitudinal et ouverte vers la zone extérieure au tube (1), rainure (14) dont les deux faces latérales (15) qui se continuent vers l'intérieur du tube (1) sont respectivement parallèles et se dirigent radialement, dans la zone qui fait suite, vers l'extérieur, à l'élément intérieur (2), **CARACTERISE** en ce :
- que le tube présente une section transversale de forme circulaire,
- que le diamètre intérieur de l'élément intérieur fermé (2) correspond au diamètre de l'âme d'un filetage extérieur, de préférence métrique, pour l'établissement d'un assemblage vissé entre les tubes (1) par le vissage d'une vis munie d'un filetage extérieur,
- qu'à la traverse (3) se trouvant entre deux gorges (14) mutuellement voisines, s'étendant de l'élément intérieur vers l'extérieur, fait suite un élément transversal (18) s'étendant transversalement par rapport aux deux côtés de ladite traverse (3), et
- que cet élément transversal (18) se prolonge pour former les faces latérales (15) mutuellement voisines des deux gorges voisines (13) entre lesquelles se trouve l'enveloppe extérieure (20) du tube (1) qui relie les deux faces latérales (15) avec formation d'une cavité.

2. Système de construction selon la revendication 1, **caractérisé** en ce que l'enveloppe (20) présente une fente longitudinale (17) qui s'étend de préférence sur toute sa longueur.

3. Système de construction selon la revendication 1, **caractérisé** en ce que le raccord présente plusieurs filetages intérieurs (7) décalés réciproquement d'un angle respectif de 90°, dont le diamètre de l'âme est supérieur au diamètre intérieur de l'élément intérieur (2).

4. Système de construction selon la revendication 3, **caractérisé** en ce que le raccord présente au moins trois filetages intérieurs dont les axes longitudinaux sont décalés réciproquement de 90° respectivement.

5. Système de construction selon la revendication 3 ou la revendication 4, **caractérisé** en ce que le raccord (4) est constitué par une bille (5) ou un cube (6).

6. Système de construction selon l'une des revendications 3 à 5, **caractérisé** en ce que la vis (9) est une vis à tête dont le filetage présente des diamètres étagés, le diamètre de l'âme du filetage prévu sur la tige (10) correspondant au diamètre de l'âme de l'élément intérieur (2) du tube (1) et le diamètre du filetage prévu sur la tête correspondant au filetage intérieur (7) du raccord (4).

7. Système de construction conforme à l'une des revendications 3 à 5, **caractérisé** en ce que les extrémités du tube (1), pour permettre la réception du raccord (4), présentent un évidement qui correspond à la forme extérieure de celui-ci.

8. Système de construction selon l'une des revendications 1 à 7, **caractérisé** en ce que l'élément intérieur (2) est relié à la paroi du tube (1) au moyen de trois ou quatre traverses (3,13).
